# EUROPEAN PATENT APPLICATION

(11) **EP 4 800 539 A1**
(43) Date of publication of application: **02.09.2026**
(21) Application number: 24955322.3
(22) Date of filing: 25.09.2024
(51) Int. Cl.: G06F 7/499, G06F 7/483

(54) **TRANSCENDENTAL FUNCTION COMPUTATION SYSTEM AND METHOD BASED ON INTERPOLATION APPROXIMATION, AND CHIP AND TERMINAL DEVICE**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN); Verisilicon Microelectronics (Hainan) Co., Ltd., Haikou, Hainan 570208 (CN); VeriSilicon Microelectronics (Nanjing) Co., Ltd., Nanjing, Jiangsu 210032 (CN); VeriSilicon Technology (Shanghai) Co., Ltd., Shanghai 201306 (CN)
(72) Inventor: ZHANG, Ziji, Chengdu, Sichuan 610041 (CN); FAN, Xu, Chengdu, Sichuan 610041 (CN); ZHANG, Ke, Shanghai 201203 (CN); ZHANG, Huiming, Shanghai 201203 (CN)
(74) Representative: Bayramoglu et al.
(86) International application number: PCT/CN2024/121175
(87) International publication number: WO 2026/064993

(57) **Abstract**

Provided is a transcendental-function calculation circuit system, method, chip, and terminal device, wherein the system comprises an input device for inputting a floating-point format; a single-precision floating-point format calculation circuit configured to perform a transcendental function calculation on the floating-point format by a calculation method of a single-precision floating-point multiplication, so as to output a calculation result in a half-precision floating-point format; a half-precision floating-point calculation circuit configured to perform a transcendental function calculation on the floating-point format by a calculation method of a half-precision floating-point multiplication so as to output a calculation result in a half-precision floating-point format; an output device for outputting a calculation result. By the single-precision floating-point format calculation circuit and the half-precision floating-point format calculation circuit, a high-precision and high-performance calculation on a single-precision floating-point format and a half-precision floating-point format can be performed, meeting requirements of processor chip with an API thereof.

## Description

### TECHNICAL FIELD

The present disclosure relates to the technical field of data processing and artificial intelligence (AI), in particular to a transcendental-function calculation circuit system based on interpolation approximation and method, a chip and a terminal device.

### BACKGROUND

An existing processor chip with an API (Application Programming Interface) thereof has strict-precision requirements on floating-point format calculations of a transcendental function, especially including a reciprocal operation, a square root operation, a floating-point division operation, a triangular function, and more.

Conventional methods are currently adopted to calculate a transcendental function including a Newton iteration method, a CORDIC method and a table-lookup method. The Newton iteration method is able to achieve a reasonably good convergence when calculating a transcendental function and achieve a high precision, but it is difficult to realize a calculation of a logarithmic function and a trigonometric function. In addition, when a precision of an iteration increases, a bit width required by a floating-point multiplication operation in the Newton iteration method also increases rapidly, resulting in requiring a pretty large floating-point multiplicator and adder to complete the iteration. The CORDIC algorithm is able to deal with a trigonometric function calculation better, however, it requires multiple-iterations, and it is difficult to deal with a plurality of other common transcendental functions, thus having a narrow application. Although the table-lookup method is able to achieve a good-precision and occupy a small area it is difficult to meet a precision required by a processor chip with an API thereof in a high-precision calculation, such as the precision required by a GPU (Graphics Processing Unit) and API application standards and protocols thereof, including OpenCL3.0 (Open Computing Language) and Direct3D12 (a bottom graphic application program API).

### TECHNICAL PROBLEM

An existing transcendental-function calculation method, not only requires to consume a large amount of hardware (such as floating point multipliers, adders and more) to realize a multiple iteration in order to guarantee an operation precision, but also has a narrow application range. This is because it is hard to calculate some of the transcendental functions.

### TECHNICAL SOLUTION

The present application provides a transcendental-function calculation circuit system and method based on interpolation approximation, a chip and a terminal device, in order to solve a technical problem described above, that an existing transcendental function calculation method is unable to lower a cost while guaranteeing the precision, and unable to be suitable for all the transcendental functions.

In order to achieve the purpose stated above, the present application provides a transcendental-function calculation circuit system based on an interpolation approximation, comprising:
an input device, configured to input a floating-point format having a preset number of bits, wherein the floating-point format comprises a single-precision floating-point format and a half-precision floating-point format;
a single-precision floating-point format calculation circuit, configured to perform a transcendental function calculation on the inputted floating-point format by a calculation method of a single-precision floating-point multiplication and configured to output a calculation result in a half-precision floating-point format;
a half-precision floating-point format calculation circuit, configured to perform a transcendental function calculation on the inputted floating-point format by a calculation method of a half-precision floating-point multiplication and configured to output a calculation result in a half-precision floating-point format; and
an output device, configured to output the calculation result from the single-precision floating-point format calculation circuit and the half-precision floating-point format calculation circuit.

Preferably, the single-precision floating-point format calculation circuit comprises a single-precision floating-point converter, a single-precision mantissa corrector, a single-precision mantissa interpolator, a single-precision exponent calculator, a first single-precision floating-point multiplier generator, a second single-precision floating-point multiplier generator, a single-precision floating-point multiplicator and a first half-precision floating-point converter; the single-precision floating-point converter is configured to convert the inputted half-precision floating-point format into a single-precision floating-point format; the single-precision mantissa corrector is configured to correct a single-precision mantissa of a single-precision floating-point format converted by the single-precision floating-point converter; the single-precision mantissa interpolator is configured to interpolate the single-precision mantissa corrected by the single-precision mantissa corrector; the single-precision exponent calculator is configured to acquire an exponent of the single-precision floating-point format converted by the single-precision floating-point converter; the first single-precision floating-point multiplier generator is configured to generate a first single-precision floating-point multiplier according to an output result of the single-precision mantissa interpolator and an output result of the single-precision exponent calculator; the second single-precision floating-point multiplier generator is configured to generate a second single-precision floating-point multiplier according to the single-precision floating-point format converted by the single-precision floating-point converter; the single-precision floating-point multiplicator is configured to perform a floating-point multiplication operation on the first single-precision floating-point multiplier and the second single-precision floating-point multiplier; the first half-precision floating-point converter is configured to convert a calculation result of the single-precision floating-point multiplicator into a half-precision floating-point format.

Preferably, the single-precision floating-point converter is configured to convert the inputted half-precision floating-point format into a single-precision floating-point format having an exponential bit width of 8.

Preferably, the half-precision floating-point format calculation circuit comprises a half-precision floating-point exponent expander, a half-precision mantissa corrector, a half-precision mantissa interpolator, a half-precision exponent calculator, a first extended half-precision floating-point multiplier generator, a second half-precision floating-point multiplier generator, a half-precision floating-point multiplicator and a second half-precision floating-point converter; the half-precision floating-point exponent expander is configured to expand an exponent of the inputted half-precision floating-point format to a preset number of bits; the half-precision mantissa corrector is configured to correct a mantissa of the half-precision floating-point format expanded by the half-precision floating-point exponent expander; the half-precision mantissa interpolator is configured to interpolate the mantissa corrected by the half-precision mantissa corrector; the half-precision exponent calculator is configured to acquire an exponent of the half-precision floating-point format expanded by the half-precision floating-point exponent expander; the first extended half-precision floating-point multiplier generator is configured to generate a first half-precision floating-point multiplier according to an output result of the half-precision mantissa interpolator and an output result of the half-precision exponent calculator; the second half-precision floating-point multiplier generator is configured to generate a second half-precision floating-point multiplier according to the half-precision floating-point format expanded by the half-precision floating-point exponent expander; the half-precision floating-point multiplicator is configured to perform a floating-point multiplication operation on the first half-precision floating-point multiplier and the second half-precision floating-point multiplier; the second half-precision floating-point converter is configured to convert a calculation result of the half-precision floating-point multiplicator into a half-precision floating-point format.

Preferably, the half-precision floating-point exponent expander is configured to expand an exponent of the inputted half-precision floating-point format to 6 bits.

Preferably, the half-precision floating-point exponent expander is configured to determine whether an exponent of the inputted half-precision floating-point format is 0 or not; if the exponent is not 0, a new exponent (an expanded exponent) is obtained by adding a preset bias difference to an original exponent so as to obtain a half-precision floating-point format with an exponent expanded; if the exponent is 0, an operation on leading-zeros is calculated and a normalization process is performed on the half-precision floating-point format according to a calculation result, so as to obtain a half-precision floating-point format having an exponent expanded with normalization.

Preferably, the normalization process comprises steps of:
assuming a calculation result of the leading-zeros is S;
left-shifting the mantissa of the input half-precision floating-point format by S bits, and subtracting the S bits from the original exponent to obtain a new expanded exponent; and
obtaining a converted half-precision floating-point format according to the left-shifted mantissa and the new exponent.

Preferably, the half-precision floating-point multiplicator comprises an input unit, an exponent calculation unit, a mantissa calculation unit, a multiplication matrix unit, a divisible unit and an output unit; the input unit is configured to input the first half-precision floating-point multiplier and the second half-precision floating-point multiplier; the exponent calculation unit is configured to calculate an exponent of the first half-precision floating-point multiplier and an exponent of the second half-precision floating-point multiplier; the mantissa calculation unit is configured to calculate a mantissa of the first half-precision floating-point multiplier and a mantissa of the second half-precision floating-point multiplier; the multiplication matrix unit is configured to perform a floating-point multiplication operation according to the mantissa calculated by the mantissa calculation unit; the divisible unit is configured to round up a bit width of the floating-point format according to a divisible flag; the output unit is configured to output a final floating-point multiplication operation result according to a rounding result of the divisible unit and an exponent calculated by the exponent calculation unit.

Preferably, the input unit comprises two input nodes, wherein a bit width of one input node comprises a first mantissa in a first number of bits and a bit of a hidden 1, and a bit width of another input nodes comprises a second mantissa in a second number of bits and a bit of a hidden 1, wherein both of the input nodes have a same exponent; and a bit width of an output node of the output unit comprises a third mantissa in a maximum bit width of 33 bits and a bit of a hidden 1.

Preferably, the transcendental-function calculation circuit system based on the interpolation approximation further comprises a half-precision divisible checker, configured to perform a divisible check on the single-precision floating-point multiplicator of the single-precision floating-point format calculation circuit and a divisible check on the half-precision floating-point multiplicator of the half-precision floating-point format calculation circuit according to the floating-point format inputted by the inputted device, so as to obtain the divisible flag.

Preferably, the single-precision mantissa corrector or the half-precision mantissa corrector is configured to correct the mantissa by means of:
if the transcendental function is a trigonometric function, reducing a range of a given input and adjusting the mantissa;
if the transcendental function is a logarithmic function, then updating the mantissa where the mantissa of an output result of the logarithmic function is close to 0;
if the transcendental function is an exponential function, then separating an integer part from a decimal part on a true value of the exponential function and calculating the mantissa according to the decimal part, so as to update the mantissa;
if the transcendental function is a square-root or reciprocal-square-root function, then updating the mantissa according to a parity thereof;
if the transcendental function is a reciprocal function, then the mantissa needs no correction;
if the transcendental function is a division function, then the mantissa needs no correction; or
if a dividend can be expressed as a multiple of an integer multiple of a divisor and a power of 2, then rounding the dividend to a mantissa with a preset number of bits and rounding to a closest half-precision floating-point even number, so as to correct the mantissa.

Preferably, a mantissa interpolator is configured to perform a quadratic interpolation on a mantissa having been corrected by the mantissa corrector, wherein a calculation formula for the quadratic interpolation is: $f \left(x\right) = a + bx + cx \overline{x}$ where *a*, *b*, and *c* are 3 interpolation coefficients generated by searching according to high bits of a coefficient corrected mantissa in a lookup table; *x* is the rest lower bits of the corrected mantissa, and *x̅* is a bitwise inversion of *x*.

Preferably, the input device inputs a floating-point format of 32 bits; and the output device outputs a floating-point format of 32 bits.

In order to solve the technical problem stated above, the present application further provides a transcendental function calculation method based on the interpolation approximation, applied to the transcendental-function calculation circuit system based on the interpolation approximation as described above, comprising steps of:
constructing a transcendental-function calculation circuit system;
inputting a floating-point format having a preset number of bits to the transcendental-function calculation circuit system, the floating-point format comprises a single-precision floating-point format and a half-precision floating-point format;
performing a transcendental function calculation on the inputted floating-point format by the transcendental-function calculation circuit system according to a calculation method of a single-precision floating-point multiplication, and outputting a calculation result in a half-precision floating-point format;
performing a transcendental function calculation on the inputted floating-point format by the transcendental function calculation circuit system according to a calculation method of a half-precision floating-point multiplication and outputting a calculation result in a half-precision floating-point format.

In order to solve the technical problem stated above, the present application further provides a chip, the chip has integrated with the transcendental-function calculation circuit system as described above.

In order to solve the technical problem stated above, the present application further provides a terminal device, comprising the chip integrated with the transcendental-function calculation circuit system as described above.

The present application provides a transcendental-function calculation circuit system and method based on interpolation approximation, a chip and a terminal device. By the single-precision floating-point format calculation circuit and the half-precision floating-point format calculation circuit, it is able to perform a high-precision and high-performance calculation on a single-precision floating-point format and a half-precision floating-point format, meeting requirements of a processor chip and an API thereof. The present application not only enables the calculation method of a transcendental function to have a low cost while ensuring a precision thereof, but also suitable for all kinds of transcendental functions.

### BRIEF DESCRIPTION OF THE DRAWINGS

FIG. 1 illustrates a structural diagram of a transcendental-function calculation circuit system based on interpolation approximation according to an embodiment of the present application;
FIG. 2 illustrates a schematic internal structural diagram of a transcendental-function calculation circuit system based on interpolation approximation according to an embodiment of the present application;
FIG. 3 illustrates a schematic structural diagram of a half-precision floating-point multiplicator according to an embodiment of the present application;
FIG. 4 illustrates a diagram of a comparison of the calculation process between the single-precision floating-point format calculation circuit and the half-precision floating-point format calculation circuit according to an embodiment of the present application;
FIG. 5 illustrates a schematic flow chart of a transcendental function calculation method based on interpolation approximation according to an embodiment of the present application;
FIG. 6 illustrates a schematic diagram of a process of a mantissa interpolator configured to perform a mantissa interpolating calculation according to an embodiment of the present application;
FIG. 7 illustrates a schematic diagram of a logical flow of the half-precision floating-point exponent expander for normalizing a half-precision floating-point format according to an embodiment of the present application;
FIG. 8 illustrates a schematic diagram of a process of the half-precision floating-point multiplicator configured to perform a floating-point multiplication operation according to an embodiment of the present application;
wherein: 100 input device; 200 single-precision floating-point format calculation circuit; 210 single-precision floating-point converter; 220 single-precision mantissa corrector; 230 single-precision mantissa interpolator; 240 single-precision exponent calculator; 250 first single-precision floating-point multiplier generator; 260 second single-precision floating-point multiplier generator; 270 single-precision floating-point multiplicator; 280 first half-precision floating-point converter; 300 half-precision floating-point format calculation circuit; 310 half-precision floating-point exponent expander; 320 half-precision mantissa corrector; 330 half-precision mantissa interpolator; 340 half-precision exponent calculator; 350 first extended half-precision floating-point multiplier generator; 360 second half-precision floating-point multiplier generator; 370 half-precision floating-point multiplicator; 371 input unit; 372 exponent calculation unit; 373 mantissa calculation unit; 374 multiplication matrix unit; 375 divisible unit; 376 output unit; 380 second half-precision floating-point converter; 400 output device; 500 half-precision divisible checker.

### DESCRIPTION OF THE EMBODIMENTS

The following provides a further detailed explanation on a transcendental-function calculation circuit system and method based on interpolation approximation, a chip and a terminal device proposed by the present application, in conjunction with the accompanying drawings and specific embodiments. It should be noted that the accompanying drawings are all in a very simplified form and using imprecise proportions, only for the convenience and clarity of assisting in explaining the purpose of the embodiments of the present application. In addition, the structure shown in the accompanying drawings is often a part of the actual structure. Specifically, the emphasis shown in each of the accompanying drawings is different, and sometimes different proportions may be adopted.

It is noted that the terms "first", "second", and more, used in the specification, claims, and accompanying drawings of the present application are intended to distinguish similar objects, in order to describe the embodiments of the present application, instead of describing a specific order or sequence. It should be understood that the structures used in this way may be interchangeable in appropriate circumstances. In addition, the terms 'including' and 'having', as well as any variations thereof, are intended to cover non-exclusive inclusions, such as processes, methods, systems, products, or devices that contain a series of steps or units, that are not necessarily limited to those having been clearly listed, but may also include other steps or units that are not clearly listed or inherent to these processes, methods, products, or devices.

A standard floating-point format mainly consists of three parts: sign, exponent, and mantissa. Wherein a single-precision floating-point format includes 1 bit for the sign, 8 bits for the exponent and 23 bits for the mantissa, having a dynamic range of [2⁻¹²⁷,2¹²⁸); while a half-precision floating-point format includes 1 bit for the sign, 5 bits for the exponent and 10 bits for the mantissa, having a dynamic range of [2⁻¹⁵,2¹⁶).

Currently, taking GPU as an example, mainstream APIs of the GPU have strict requirements on a-precision calculation for a format of a single-precision floating-point format and a format of a half-precision floating-point format, and requires that the half-precision floating-point format must support an exponent of all zeros, that is a de-normalized format with a dynamic range of [2⁻²⁴,2¹⁵].

For a floating-point format, the precision thereof mainly depends on a mantissa part, while an exponential part provides a dynamic range. Specifically, a bit width of the mantissa part determines a relative-precision of the floating-point format, that is, a precision value represented by an LSB. The exponential part affects an absolute-precision of the floating-point format through an actual power bias.

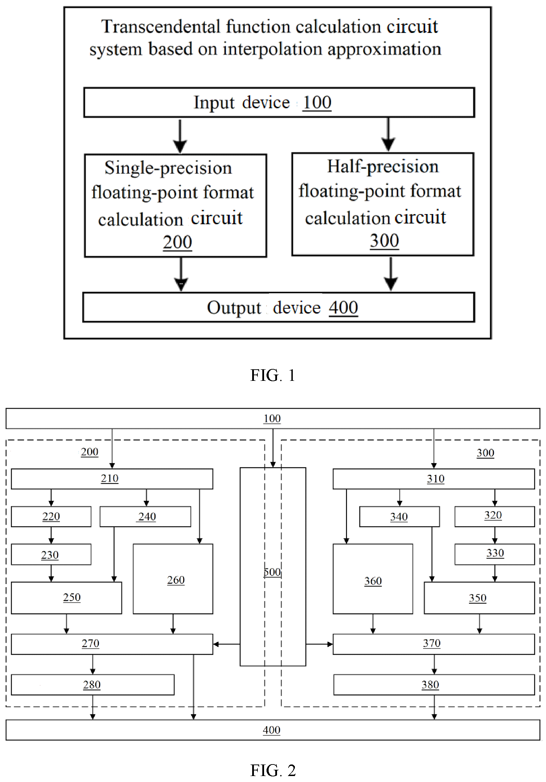

Based on the principle, the present application provides a transcendental function calculation circuit system based on interpolation approximation, shown as FIG.1, comprising: an input device 100, configured to input a floating-point format having a preset number of bits, the floating-point format comprises a single-precision floating-point format and a half-precision floating-point format; a single-precision floating-point format calculation circuit 200, configured to perform a transcendental function calculation on the input floating-point format by a calculation method of a single-precision floating-point multiplication and configured to output a calculation result in a half-precision floating-point format; a half-precision floating-point format calculation circuit 300, configured to perform a transcendental function calculation on the input floating-point format by a calculation method of a half-precision floating-point multiplication, and configured to output a calculation result in a half-precision floating-point format; an output device 400, configured to output the calculation result from the single-precision floating-point format calculation circuit 200 and the half-precision floating-point format calculation circuit 300, the calculation result is in a floating-point format comprising a single-precision floating-point format and a half-precision floating-point format.

The present embodiment provides a transcendental-function calculation circuit system based on interpolation approximation. By the single-precision floating-point format calculation circuit 200 and the half-precision floating-point format calculation circuit 300, it is able to perform a high-precision and high-performance calculation on a single-precision floating-point format and a half-precision floating-point format, meeting more requirements of a processor chip and an API thereof. The present application can not only enable the calculation method of a transcendental function to have a low cost while ensuring the-precision thereof, but also being able to suitable for all kinds of transcendental functions.

In the present embodiment, wherein the input device inputs a floating-point format of 32 bits; and the output device outputs a floating-point format of 32 bits. Of course, in other embodiments, a number of bits of the input floating-point format and a number of bits of the output floating-point format may be anyone of other numbers of bits, and there is no restriction in the present application.

Specifically, in the present embodiment, shown as FIG.2, the single-precision floating-point format calculation circuit 200 comprises a single-precision floating-point converter 210, a single-precision mantissa corrector 220, a single-precision mantissa interpolator 230, a single-precision exponent calculator 240, a first single-precision floating-point multiplier generator 250, a second single-precision floating-point multiplier generator 260, a single-precision floating-point multiplicator 270 and a first half-precision floating-point converter 280.

An input node of the single-precision floating-point converter 210 is connected to a first output node of the input device 100, configured to convert a half-precision floating-point format having been input into a single-precision floating-point format. An input node of the single-precision mantissa corrector 220 is connected to a first output node of the single-precision floating-point converter 210, configured to correct a single-precision mantissa of the single-precision floating-point format converted by the single-precision floating-point converter 210. An input node of the single-precision mantissa interpolator 230 is connected to an output node of the single-precision mantissa corrector 220, configured to interpolate the single-precision mantissa corrected by the single-precision mantissa corrector 220. An input node of the single-precision exponent calculator 240 is connected to a second output node of the single-precision floating-point converter 210, configured to acquire an exponent of the single-precision floating-point format converted by the single-precision floating-point converter 210. One input node of the first single-precision floating-point multiplier generator 250 is connected to an output node of the single-precision mantissa interpolator 230, while another is connected to an output node of the single-precision exponent calculator 240, and the first single-precision floating-point multiplier generator 250 is configured to generate a first single-precision floating-point multiplier according to an output result of the single-precision mantissa interpolator 230 and an output result of the single-precision exponent calculator 240. An input node of the second single-precision floating-point multiplier generator 260 is connected to a third output node of the single-precision floating-point converter 210, and the second single-precision floating-point multiplier generator 260 is configured to generate a second single-precision floating-point multiplier according to the single-precision floating-point format converted by the single-precision floating-point converter 210. One input node of the single-precision floating-point multiplicator 270 is connected to an output node of the first single-precision floating-point multiplier generator 250, while another connects to an output node of the second single-precision floating-point multiplier generator 260, and the first single-precision floating-point multiplier generator 250 is configured to perform a floating-point multiplication operation on the first single-precision floating-point multiplier and the second single-precision floating-point multiplier. An input node of the first half-precision floating-point converter 280 is connected to an output node of the single-precision floating-point multiplicator 270, and the first half-precision floating-point converter 280 is configured to convert a calculation result of the single-precision floating-point multiplicator 270 into a half-precision floating-point format.

In a real application, if the input device 100 inputs a 32-bit single-precision floating-point format, then the 32-bit single-precision floating-point format may be sent directly to the single-precision floating-point format calculation circuit 200, and the single-precision floating-point converter 210 does not have to perform a single-precision floating-point conversion thereto. If a 16 bit half-precision floating-point format is being input, this input shall be converted to a single-precision floating-point format by the single-precision floating-point converter 210, that is, extended to an 8-bit exponent, so as to convert an input of a de-normalized half-precision floating-point to a normalized single-precision floating-point format.

Further, in the present embodiment, shown as FIG.2, the half-precision floating-point format calculation circuit 300 comprises a half-precision floating-point exponent expander 310, a half-precision mantissa corrector 320, a half-precision mantissa interpolator 330, a half-precision exponent calculator 340, a first extended half-precision floating-point multiplier generator 350, a second half-precision floating-point multiplier generator 360, a half-precision floating-point multiplicator 370 and a second half-precision floating-point converter 380.

An input node of the half-precision floating-point exponent expander 310 connects to a third output node of the input device 100, and the half-precision floating-point exponent expander 310 is configured to expand an exponent of an input half-precision floating-point format to a preset number of bits. An input node of the half-precision mantissa corrector 320 connects to a first output node of the half-precision floating-point exponent expander 310, the half-precision mantissa corrector 320 is configured to correct a mantissa of a half-precision floating-point format expanded by the half-precision floating-point exponent expander 310. An input node of the half-precision mantissa interpolator 330 connects to an output node of the half-precision mantissa corrector 320, and the half-precision mantissa interpolator 330 is configured to interpolate the mantissa corrected by the half-precision mantissa corrector 320. An input node of the half-precision exponent calculator 340 connects to a second output node of the half-precision floating-point exponent expander 310, and the half-precision exponent calculator 340 is configured to obtain an exponent of the half-precision floating-point format expanded by the half-precision floating-point exponent expander 310. One input node of the first extended half-precision floating-point multiplier generator 350 connects to an output node of the half-precision exponent mantissa interpolator 330, while another connects to an output node of the half-precision exponent calculator 340, and the first extended half-precision floating-point multiplier generator 350 is configured to generate a first half-precision floating-point multiplier based on an output result of the half-precision mantissa interpolator 330 and an output result of the half-precision exponent calculator 340. An input node of the second half-precision floating-point multiplier generator 360 connects to a third output node of the half-precision floating-point exponent expander 310, and the half-precision floating-point exponent expander 310 is configured to generate a second half-precision floating-point multiplier based on a half-precision floating-point format expanded by the half-precision floating-point exponent expander 310. One input node of the half-precision floating-point multiplicator 370 connects to an output node of the first extended half-precision floating-point multiplier generator 350 while another connects to an output node of the second half-precision floating-point multiplier generator 360, and the half-precision floating-point multiplicator 370 is configured to perform a floating-point multiplication operation on the first half-precision floating-point multiplier and the second half-precision floating-point multiplier. An input node of the second half-precision floating-point converter 380 connects to an output node of the half-precision floating-point multiplicator 370, and the second half-precision floating-point converter 380 is configured to convert a calculation result of the half-precision floating-point multiplicator 370 into a half-precision floating-point format.

In a practical application, since an exponent of a half-precision floating-point format is 5, a minimum de-normalized number that can be supported is 2⁻²⁴. When an exponent of an input half-precision floating-point format is expanded to 6 bits by the half-precision floating-point exponent expander 310, a minimum normalized number that can be supported is 2⁻³⁰. Now all inputs in the de-normalized format can be converted into a floating-point in the normalized format.

Specifically, the half-precision floating-point exponent expander 310 provided in the present embodiment, when performing an exponent expansion, determines whether a exponent of a half-precision floating-point format being inputted is 0 or not. If the exponent is not 0, then obtaining a new exponent by adding a bias difference to an original exponent, so as to obtain a half-precision floating-point format with an exponent expanded. If the exponent is 0, then an operation on leading-zeros is given and a normalization process is performed to the half-precision floating-point format based on a result so as to obtain a half-precision floating-point format having an exponent expanded with normalization.

Wherein, steps to perform the normalization process comprise: firstly, assuming a counting result of the leading-zeros is S; then, left-shifting a mantissa of the input half-precision floating-point format by S bits, and subtracting the S bits from the original exponent to obtain a new expanded exponent; finally, obtaining a converted half-precision floating-point format based on the new exponent and the left-shifted mantissa .

Further, in order to further improve a computational power of a floating-point division function, in the present embodiment, wherein the single-precision floating-point format calculation circuit 200 comprises a single-precision floating-point multiplicator 270 in a whole. Since a fact that the single-precision floating-point multiplicator 270 can also be configured to implement a half-precision floating-point transcendental function calculation, thus a half-precision floating-point division implemented by a single-precision floating-point operation circuit has a much higher precision than an accuracy of a half-precision floating-point operation specified by a GPU API.

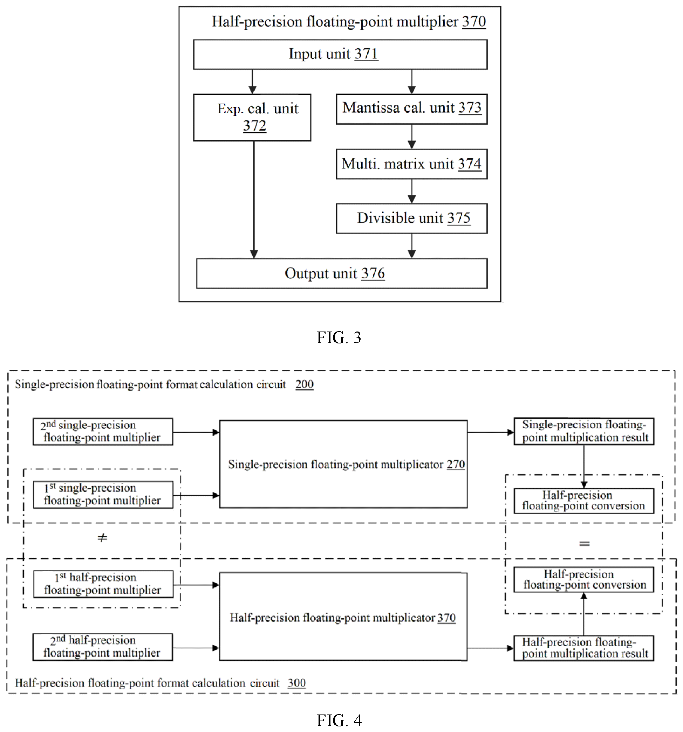

Furthermore, in order to ensure that a half-precision floating-point division operation can achieve a same high accuracy, in the present embodiment, the half-precision floating-point format calculation circuit 300 comprises a specially designed, dedicated floating-point multiplicator having a bit width greater than that of a standard half-precision floating-point division, that is, a half-precision floating-point multiplicator 370. Shown as FIG. 3, the half-precision floating-point multiplicator 370 comprises an input unit 371, an exponent calculation unit 372, a mantissa calculation unit 373, a multiplication matrix unit 374, a divisible unit 375, and an output unit 376. The input unit 371 is configured to input the first half-precision floating-point multiplier and the second half-precision floating-point multiplier. An input terminal of the exponent calculation unit 372 is connected to a first output terminal of the input unit 371, the exponent calculation unit 372 is configured to calculate an exponent of the first half-precision floating-point multiplier and an exponent of the second half-precision floating-point multiplier. An input terminal of the mantissa calculation unit 373 is connected to a second output terminal of the input unit 371, configured to calculating a mantissa of the first half-precision floating-point multiplier and a mantissa of the second half-precision floating-point multiplier. An input terminal of the multiplication matrix unit 374 is connected to an output terminal of the mantissa calculation unit 373, the multiplication matrix unit 374 is configured to perform a floating-point multiplication operation according to the mantissa calculated by the mantissa calculation unit 373. An input terminal of the divisible unit 375 is connected to an output terminal of the multiplication matrix unit 374, and the divisible unit 375 is configured to round up a bit width of a floating-point format according to a division flag. One input terminal of the output unit 376 is connected to an output terminal of the exponent calculation unit 372, while another is connected to an output terminal of the divisible unit 375, and the output unit 376 is configured to output a final floating-point multiplication result according to a rounding result from the divisible unit 375 and an exponent calculated by the exponent calculation unit 372.

In a real application, a bit width of one input node of the half-precision floating point multiplicator 370 includes a first number of bits for a first mantissa and one bit for a hidden 1, and a bit width of another input node includes a second number of bits for a second mantissa and one bit for a hidden 1, while both input nodes have a same exponent. The output node comprises a third mantissa in a maximum bit width of 33 bits and one bit for a hidden 1.

In a specific embodiment, one input node of the half-precision floating-point multiplicator 370 has a bit width including 22 bits for a mantissa and 1 bit for a hidden 1, while another input node of a standard half-precision floating point number has a bit width including 10 bit for a mantissa and 1 bit for a hidden 1, thus after calculation, an output node has a maximum bit width of 33 bits and one bit for a hidden 1. In order to support a non-normalized half-precision floating-point format, both exponents of two input data are arranged as 6 bits. Thus, shown as FIG. 4, the transcendental-function calculation circuit system based on the interpolation approximation provided in the present embodiment is able to allow both the half-precision floating-point format calculation circuit 300 and the single-precision floating-point format calculation circuit 200 to produce different calculation results at a secondary interpolation stage; however, after the final output results are corrected by the half-precision floating-point multiplicator 370, the half-precision floating-point format calculation circuit 300 and the single-precision floating-point format calculation circuit 200 will have a same final calculated output result on a same input.

Preferably, in the present embodiment, shown as FIG. 2, the transcendental-function calculation circuit system based on the interpolation approximation further comprises a half-precision divisible checker 500, an input node of the half-precision divisible checker 500 is connected to the input device 100, while one output node is connected to the single-precision floating-point multiplicator 270 and another is connected to the half-precision floating-point multiplicator 370, and the half-precision divisible checker 500 is configured to perform a divisible-check on the single precision floating-point multiplicator 270 of the single-precision floating-point format calculation circuit 200 and a divisible-check on the half-precision floating-point multiplicator 370 of the half-precision floating-point format calculation circuit 300 according to the floating-point format inputted by the input device 100, so as to obtain the divisible flag.

Further, in the present embodiment, the single-precision mantissa corrector 220, the single-precision mantissa interpolator 230, and the single-precision exponent calculator 240 in the single-precision floating-point format calculation circuit 200 may be as same as the half-precision mantissa corrector 320, the half-precision mantissa interpolator 330, and the half-precision exponent calculator 340 in the half-precision floating-point format calculation circuit 300, thereby reducing a development difficulty and workload of the transcendental-function calculation circuit system.

Specifically, in the present embodiment, the single-precision mantissa corrector 230 or the half-precision mantissa interpolator 220 is configured to correct the mantissa by means of:
if the transcendental function is a trigonometric function, reducing a range of a given input, and adjusting the mantissa;
if the transcendental function is a logarithmic function, then updating the mantissa where the mantissa of an output result of the logarithmic function is close to 0;
if the transcendental function is an exponential function, then separating an integer part from a decimal part on a true value of the exponential function and calculating the mantissa according to the decimal part, so as to update the mantissa;
if the transcendental function is a square-root or reciprocal-square-root function, then updating the mantissa according to a parity thereof;
if the transcendental function is a reciprocal function, then the mantissa needs no correction;
if the transcendental function is a division function, then the mantissa needs no correction; or if a dividend can be expressed as a multiple of an integer multiple of a divisor and a power of 2, then rounding the dividend to a mantissa with a preset number of bits and rounding to a closest half-precision floating-point even number, so as to correct the mantissa.

Further, the half-precision mantissa interpolator 330 is configured to perform a quadratic interpolation on a mantissa having been corrected by the half-precision mantissa corrector 320, the single-precision mantissa interpolator 230 is configured to perform a quadratic interpolation on a mantissa having been corrected by the single-precision mantissa corrector 220, wherein a calculation formula for the quadratic interpolation is: $f \left(x\right) = a + bx + cx \overline{x}$ where *a*, *b*, and *c* are 3 interpolation coefficients generated from several high bits of a corrected mantissa through a lookup table; *x* is the rest lower bits of the corrected mantissa, and *x̅* is a bitwise inversion of *x*.

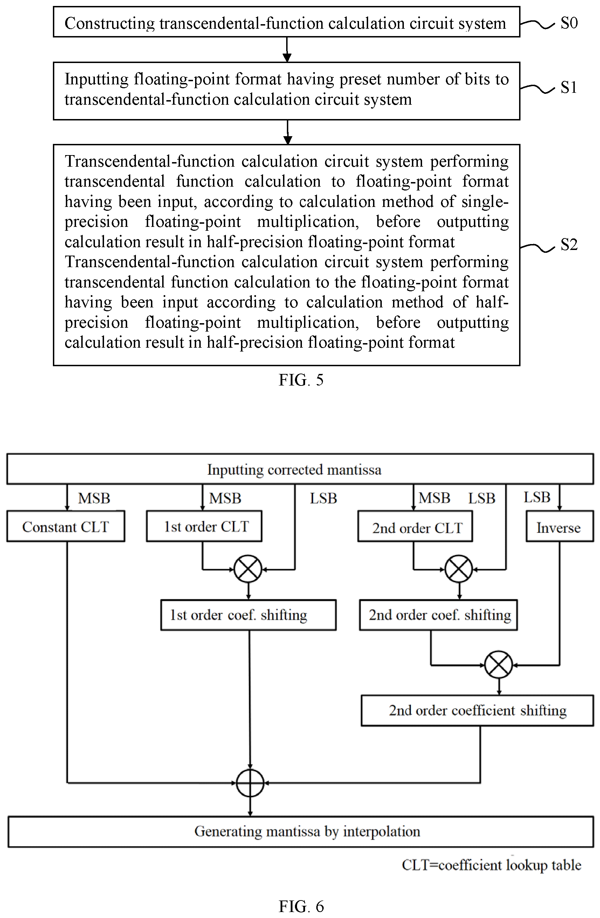

The present embodiment further provides a transcendental function calculation method based on the interpolation approximation, shown as FIG. 5, comprising steps of:
S0, constructing a transcendental-function calculation circuit system;
S1, inputting a floating-point format having a preset number of bits to the transcendental-function calculation circuit system; and
S2, performing a transcendental function calculation on the input floating-point format by the transcendental-function calculation circuit system according to a calculation method of a single-precision floating-point multiplication, and outputting a calculation result in a half-precision floating-point format; performing a transcendental function calculation on the input floating-point format by the transcendental function calculation circuit system according to a calculation method of a half-precision floating-point multiplication, and outputting a calculation result in a half-precision floating-point format.

Specifically, in the present embodiment, the step S0, constructing a transcendental-function calculation circuit system, the transcendental-function calculation circuit system may be the transcendental-function calculation circuit system based on the interpolation approximation as described in the present application.

And, in the present embodiment, the step S1, inputting a floating-point format having a preset number of bits to the transcendental-function calculation circuit system, wherein the floating-point format comprises a single-precision floating-point format and a half-precision floating-point format. In a real application, the floating-point format may be one 32-bit single-precision floating-point format or two half-precision floating-point formats.

Further, the present embodiment, wherein in the step S2, performing a transcendental function calculation on the input floating-point format by the transcendental-function calculation circuit system according to a calculation method of a single-precision floating-point multiplication, and outputting a calculation result in a half-precision floating-point format; performing a transcendental function calculation by the transcendental-function calculation circuit system on the input floating-point format according to a calculation method of a half-precision floating-point multiplication, and outputting a calculation result in a half-precision floating-point format, wherein, the step of performing a transcendental function calculation on the input floating-point format according to the calculation method of a single-precision floating-point multiplication, may be achieved by the single-precision floating-point format calculation circuit 200, comprising steps:

S211, converting an input floating-point format into a single-precision floating-point format.
Specifically, a single-precision floating-point converter 210 is configured to convert the input half-precision floating-point format into a single-precision floating-point format with an exponent of 8, so as to convert an input in a non-normalized half-precision floating-point format into a normalized single-precision floating-point format.

S212, performing a mantissa correction and a mantissa interpolation sequentially onto a single-precision floating-point format, so as to generate a first single-precision floating-point multiplier. Specifically, in the present embodiment, a method of performing a mantissa correction by a single-precision mantissa corrector 220, comprises steps of:
if a transcendental function is a trigonometric function, due to a periodic character, an input that performs the trigonometric function could be range-reduced to a small value, and the mantissa is adjusted as well;
if a transcendental function is a logarithmic function, due to an exponential part of an input value affecting only an integer part of output result, a most precise requirement occurs at an input value is close to 1, that is, where an output value is close to 0; that is to say, if an output value is close to 0, it can meet the accuracy requirement, and thus it will also meet the accuracy requirement in a case of the output value deviating from 0l therefore, the mantissa is updated according to a case that a mantissa of an output value of the logarithmic function can meet the accuracy requirement when the output value is approaching 0;
if the transcendental function is an exponential function, then separating an integer part from a decimal part on a true value of the exponential function, wherein the integer part is equivalent to an exponential of an output result, the decimal part is configured to calculate a mantissa, so as to update the mantissa;
if the transcendental function is a square-root or reciprocal-square-root function, then updating the mantissa according to the parity thereof;
if the transcendental function is a reciprocal function, then the mantissa needs no correction;
if the transcendental function is a division function, then the mantissa needs no correction; or if a dividend can be expressed as a multiple of an integer multiple of a divisor and a power of 2, firstly rounding the dividend to a preserved mantissa, and then rounding to a closest half-precision floating-point even number, so as to correct the mantissa. Herein the preserved mantissa may be 19.

By correcting an output mantissa of the transcendental function, the present embodiment is able to ensure that a final calculation result meets an accuracy requirement of a processor and an interface API thereof.

And, in the present embodiment, a method of performing the mantissa interpolation by a mantissa interpolator, comprises: performing a quadratic interpolation on a mantissa corrected by the mantissa corrector, wherein a calculation formula for the quadratic interpolation is: $f \left(x\right) = a + bx + cx \overline{x}$ where *a*, *b*, and *c* are 3 interpolation coefficients generated by searching in a coefficient lookup table according to the high bits of a corrected mantissa; *x* is the rest lower bits of the corrected mantissa, and *x̅* is a bitwise inversion of *x*.

Shown as FIG. 6, a coefficient searching is performed in a plurality of coefficient lookup tables that include a constant coefficient lookup table, a first-order coefficient lookup table and a second-order coefficient lookup table according to high bits of the corrected mantissa. A position shift is then performed for middle lower bits of the mantissa according to a coefficient in the coefficient lookup table corresponding to middle high bits, and the lowest bit of the mantissa is inverted and shifted; finally, the lookup table coefficient corresponding to the highest bit of the mantissa is combined and assembled with shifted results of other bits so as to obtain a mantissa secondly interpolated.

Since it needs a very large lookup table for coefficient query if totally relying on a lookup table is required, it is not acceptable when taking account of a chip area, thus the present embodiment adopts several high bits as an index value of the lookup table according to the manner described above, while the rest lower bits is configured to interpolate in gaps of the lookup table to produce a corresponding result. Since a substantial accuracy requirement for a calculation of a half-precision floating-point transcendental function is far lower than that for a calculation of a single-precision floating point format, thus in the present embodiment by adopting only a lookup table with a smaller bit width for a circuit of the half-precision floating-point format, it is still able to ensure a calculation accuracy requirement.

In order to generate a first single-precision floating-point multiplier, it requires not only an output result of the mantissa interpolator, but an exponent calculator is also adopted to obtain an exponent of the converted single-precision floating-point format, in the present embodiment, the bit width of the exponent herein is 8. Then, the result of the mantissa interpolation and the exponent are combined and assembled so as to obtain a first multiplier of the floating-point multiplication.

S213, performing a floating-point multiplication operation on the first single-precision floating-point multiplier and the second single-precision floating-point multiplier so as to obtain a single-precision operation result.

Specifically, in order to improve a computing power of a floating-point division function, in the present embodiment, a single-precision floating-point multiplicator 270 is adopted to complete a floating-point multiplication operation by a single instruction. For a single-precision floating-point division operation, it is possible to be achieved by adopting a reciprocal of a divisor can be multiplied by a dividend. In the present embodiment, it adopts a complete single-precision floating-point multiplicator to implement a division operation.

Since a single-precision floating-point format calculation circuit 200 is also able to be configured to implement a half-precision floating-point transcendental function calculation, thus the single-precision floating-point format calculation circuit owns a calculation accuracy of a half-precision floating-point operation far more than that specified by a GPU API when it is configured to implement a half-precision floating-point division.

S214, converting a single-precision operation result into a half-precision floating-point format.

The single-precision floating-point format calculation circuit 200 in the present embodiment has a specific implementation mode similar to that in the prior art. A personnel skilled in the art may learn from the present disclosure in combination with the prior art, no more details are repeated herein.

Also, a half-precision floating-point format calculation circuit 300 is adopted for a calculation below:
S221, converting an input floating-point format into a half-precision floating-point format.

Specifically, since an original half-precision floating-point format has an exponent bit width of 5, in order to convert it from a de-normalized input to a normalized floating-point format, the bit width of exponent thereof is expanded to 6 bits, so that a minimum normalized number it can support is 2⁻³⁰.

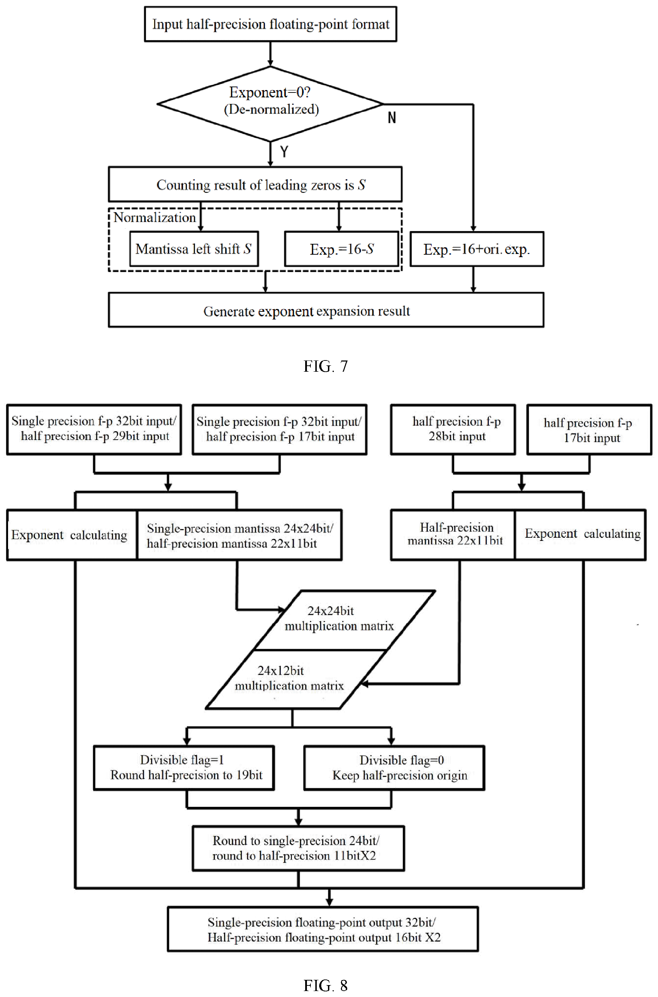

In the present embodiment, shown as FIG. 7, the method of converting an input floating-point format into the half-precision floating-point format, comprises: determining whether an exponent of a half-precision floating-point format being inputted is 0 or not. If the exponent is not 0, then obtaining a new exponent by adding a bias difference to an original exponent. When the bias difference is 16, the new exponent may be expressed as that the new exponent is equal to 16 plus the original exponent, and then obtaining the converted half-precision floating point format , that is, a result with an exponent expanded. If the exponent is 0, then a plurality of leading zeros are given and a normalization process is performed on the half-precision floating-point format according to the result. Herein, assuming a result of the leading-zeros is S, left-shifting a mantissa of the input half-precision floating-point format by *S* bits, and subtracting the *S* bits from the bias difference so as to obtain a new exponent. When the bias difference is 16, the new exponent may be expressed as that the new exponent equals to 16 minus S, thus the converted half-precision floating-point format can be obtained according to the new exponent and the left-shifted mantissa.

S222, performing a mantissa correction and a mantissa interpolation sequentially on the half-precision floating-point format, so as to generate the first half-precision floating point multiplier.

Wherein the method of mantissa correcting, mantissa interpolating or generating the first half-precision floating point multiplier is similar to that in step S212, no more details are repeated herein.

Preferably, in order to further reduce the bit width of the lookup table on the coefficients of the transcendental function and the bit width of a fixed-point number multiplicator for a secondary interpolation and to ensure a calculation accuracy, in the present embodiment, when the transcendental function is a division function, if a dividend can be expressed as a multiple of an integer multiple of a divisor and a power of 2, that is, when dividing in a floating-point format, the dividend is rounded to a mantissa with a preset number of bits and is then rounded to a closest half-precision floating-point even number, so as to correct the mantissa.

S223, performing a floating-point multiplication operation with a second half-precision floating-point multiplier and a first half-precision floating-point multiplier, so as to obtain a half-precision operation result.

Specifically, in the present embodiment, firstly constructing a half-precision floating-point multiplicator 370, wherein a bit width of one input node thereof comprises a mantissa of a plurality of bits and a bit of a hidden 1, and a bit width of another input node comprises a mantissa in a plurality of bits and a bit of a hidden 1, while both input nodes have a same exponent; and a bit width of an output end thereof is comprises a mantissa in a maximum bit width of 33 bits with a bit of a hidden 1. In a specific embodiment, the bit width of one input node of a half-precision floating-point multiplicator 370 comprises a mantissa of 22 bits and a bit of an hidden 1, and a bit width of another input node comprises a mantissa of 10 bits and a bit of an hidden 1, while both input nodes have a same exponent of 6 bits; and a bit width of an output node thereof comprises a mantissa in a maximum bit width of 33 bits with a bit of a hidden 1.

Then, both the second half-precision floating-point multiplier and the first half-precision floating-point multiplier are inputted into the half-precision floating-point multiplicator 370 for a floating-point multiplication operation, so as to obtain a half-precision operation result. In one specific embodiment, shown as FIG. 8, a 32bit single-precision floating-point number or a 29bit half-precision floating-point number or a 17bit half-precision floating-point number is inputted into one input node of the half-precision floating-point multiplicator 370, and a 28bit half-precision floating-point number or a 17bit half-precision floating-point number is inputted into another input node. An exponent calculation and a mantissa calculation are respectively performed for the inputted floating-point numbers of both input nodes. Herein for an input node that can support the single-precision floating-point format, a calculation result of the mantissa comprises a single-precision mantissa of 24×24bit or a half-precision mantissa of 22×11bit; for an input node that can merely support the half-precision floating-point format, a calculation result of the mantissa comprises a half-precision mantissa of 22×11bit. The mantissas obtained by the respective calculation results are sent to a multiplication matrix of 24×12bit for a further operation.

Further, obtaining a dividable mark. Specifically, it is possible to carry out a divisible check on a single-precision operation result and a half-precision operation result according to an input floating-point format by using a half-precision divisible checker 500, so as to obtain the divisible flag, and a value of the divisible flag may be 0 or 1. If the value of the divisible flag is 1, then a half-precision mantissa obtained by an operation of the multiplication matrix is rounded to a preset number of bits, for example, a half-precision mantissa is rounded to 19 bits. If the value of the divisible flag is 0, then a half-precision mantissa obtained by an operation of the multiplication matrix is retained. If an original input is a single-precision floating-point format, then it is rounded to a single-precision floating-point format of 24 bits. If an original input is a half-precision floating-point format, then it is rounded to a half-precision floating-point format of 11 bits × 2. A 32-bit single-precision floating-point format or two 16-bit half-precision floating-point formats will be generated according to a final mantissa.

S224, converting a result of a half-precision floating-point operation into a half-precision floating-point format.

A calculation result may be rounded according to the divisible flag in an operation of the half-precision floating-point multiplicator, and thus it is able to correct a final output result. Therefore for a same input, a final output result of a half-precision floating-point format calculation circuit is consistent with a final output calculation result of a single-precision floating-point format calculation circuit.

The transcendental function calculation method based on the interpolation approximation provided in the present embodiment is capable of performing a high-performance operation on a plurality of transcendental functions including a reciprocal function, a square root function, a reciprocal square root function, a sine function, a cosine function, a logarithmic function, an exponential function, an arc tangent function, a floating-point division function, and more. The transcendental function calculation method based on the interpolation approximation provided in the present embodiment is capable of expanding an input of a transcendental function calculation on a half-precision floating-point format to a range of a de-normalized half-precision floating-point format, thus expanding an input range and an accuracy of a half-precision floating-point format. The transcendental function calculation method based on the interpolation approximation provided in the present embodiment is capable of realizing a half-precision floating-point division calculation operated in a full-precision floating-point format, and expanding an application scope of a transcendental-function calculation circuit system. With the transcendental function calculation method based on the interpolation approximation provided in the present embodiment, an accuracy thereof is capable of meeting requirements for a processor chip and an interface API.

The present embodiment further provides a chip integrated with the transcendental function calculation circuit system based on the interpolation approximation as described above. In a practical application, the chip may be one of a plurality of processor chips including a GPU (Graphics Processing Unit), an NPU (Neural Processing Unit), an ISP (Image Signal Processing), a VPU (Video Processing Unit), a DPU (Display Processing Unit) and more.

The present embodiment further provides a terminal device comprising the chip as described above.

It is noted that each embodiment of the present description is described in a progressive manner, and each embodiment focuses on a plurality of differences from other embodiments, while a plurality of same or similar parts of each embodiment can be referred according to each other. In addition, a plurality of different parts between different embodiments can be used in combination with each other, without any restrictions in the present invention.

The present embodiment provides a transcendental-function calculation circuit system and method based on an interpolation approximation, a chip and a terminal device, wherein the system comprises an input device, configured to input a floating-point format having a preset number of bits, wherein the floating-point format comprises a single-precision floating-point format and a half-precision floating-point format; a single-precision floating-point format calculation circuit, configured to perform a transcendental function calculation on the input floating-point format by a calculation method of a single-precision floating-point multiplication and configured to output a calculation result in a half-precision floating-point format; a half-precision floating-point format calculation circuit, configured to perform a transcendental function calculation on the input floating-point format by a calculation method of a half-precision floating-point multiplication and configured to output a calculation result in a half-precision floating-point format; an output device, configured to output the calculation result from the single-precision floating-point format calculation circuit and the half-precision floating-point format calculation circuit, wherein the calculation result is a floating-point format, the floating-point format comprises a single-precision floating-point format and a half-precision floating-point format. By the single-precision floating-point format calculation circuit and the half-precision floating-point format calculation circuit, it is able to perform a high-precision and high-performance calculation on a single-precision floating-point format and a half-precision floating-point format, meeting requirements of a processor chip and an API thereof. The present application not only enables the calculation method of a transcendental function to have a low cost while ensuring a-precision thereof, but also applies to all kinds of transcendental functions.

The above description of the embodiments disclosed enables those skilled in the art to implement or use the present disclosure. Various modifications to the above embodiments shall be apparent to those skilled in the art, and the general principles defined herein may be implemented in other embodiments without departing from the spirit or scope of the present disclosure. Thus, the present disclosure will not be limited to the embodiments described herein, but be in a widest scope consistent with the principles and novel features disclosed herein**.**

### INDUSTRIAL APPLICABILITY

The present embodiment provides a transcendental-function calculation circuit system based on an interpolation approximation, by the single-precision floating-point format calculation circuit and the half-precision floating-point format calculation circuit, it is able to perform a high-precision and high-performance calculation on a single-precision floating-point format and a half-precision floating-point format, meeting requirements of a processor chip and an API thereof. The present application not only enables the calculation method of a transcendental function to have a low cost while ensuring a-precision thereof, but also applies to all kinds of transcendental functions.

The transcendental-function calculation method based on the interpolation approximation provided in the present embodiment, is able to perform a high-performance operation on a plurality of transcendental-functions including a reciprocal function, a square root function, a reciprocal square root function, a sine function, a cosine function, a logarithmic function, an exponential function, an arctangent function, and a floating-point division function.

The transcendental-function calculation method based on the interpolation approximation provided in the present embodiment is able to expand an input of a calculation of a half-precision floating-point transcendental-function to a range of non-regularization half-precision floating-point, and expand a range and precision of a half-precision floating point input.

The transcendental-function calculation method based on the interpolation approximation provided in the present embodiment achieves a full-precision division calculation for a half-precision floating-point, and broadens an application range of a transcendental-function calculation system.

The transcendental-function calculation method based on the interpolation approximation provided in the present embodiment has the precision satisfying the requirements of a processor chip and an interface API thereof.

## Claims

1. A transcendental-function calculation circuit system based on interpolation approximation, comprising:
an input device, configured to input a floating-point format having a preset number of bits, wherein the floating-point format comprises a single-precision floating-point format and a half-precision floating-point format;
a single-precision floating-point format calculation circuit, configured to perform a transcendental function calculation on the inputted floating-point format by a calculation method of a single-precision floating-point multiplication and configured to output a calculation result in a half-precision floating-point format;
a half-precision floating-point format calculation circuit, configured to perform a transcendental function calculation on the inputted floating-point format by a calculation method of a half-precision floating-point multiplication and configured to output a calculation result in a half-precision floating-point format; and
an output device, configured to output a calculation result from the single-precision floating-point format calculation circuit and the half-precision floating-point format calculation circuit.

2. The transcendental-function calculation circuit system according to claim 1, wherein the single-precision floating-point format calculation circuit comprises a single-precision floating-point converter, a single-precision mantissa corrector, a single-precision mantissa interpolator, a single-precision exponent calculator, a first single-precision floating-point multiplier generator, a second single-precision floating-point multiplier generator, a single-precision floating-point multiplicator and a first half-precision floating-point converter; wherein
the single-precision floating-point converter is configured to convert the inputted half-precision floating-point format into a single-precision floating-point format;
the single-precision mantissa corrector is configured to correct a single-precision mantissa of the single-precision floating-point format converted by the single-precision floating-point converter;
the single-precision mantissa interpolator is configured to interpolate the single-precision mantissa corrected by the single-precision mantissa corrector;
the single-precision exponent calculator is configured to acquire an exponent of the single-precision floating-point format converted by the single-precision floating-point converter;
the first single-precision floating-point multiplier generator is configured to generate a first single-precision floating-point multiplier according to an output result of the single-precision mantissa interpolator and an output result of the single-precision exponent calculator;
the second single-precision floating-point multiplier generator is configured to generate a second single-precision floating-point multiplier according to the single-precision floating-point format converted by the single-precision floating-point converter;
the single-precision floating-point multiplicator is configured to perform a floating-point multiplication operation on the first single-precision floating-point multiplier and the second single-precision floating-point multiplier; and
the first half-precision floating-point converter is configured to convert a calculation result of the single-precision floating-point multiplicator into a half-precision floating-point format.

3. The transcendental-function calculation circuit system according to claim 2, wherein the single-precision floating-point converter is configured to convert the inputted half-precision floating-point format into a single-precision floating-point format having an exponent bit width of 8.

4. The transcendental-function calculation circuit system according to claim 1, wherein the half-precision floating-point format calculation circuit comprises a half-precision floating-point exponent expander, a half-precision mantissa corrector, a half-precision mantissa interpolator, a half-precision exponent calculator, a first extended half-precision floating-point multiplier generator, a second half-precision floating-point multiplier generator, a half-precision floating-point multiplicator and a second half-precision floating-point converter; wherein
the half-precision floating-point exponent expander is configured to expand an exponent of the inputted half-precision floating-point format to a preset number of bits;
the half-precision mantissa corrector is configured to correct a mantissa of the half-precision floating-point format expanded by the half-precision floating-point exponent expander;
the half-precision mantissa interpolator is configured to interpolate the mantissa corrected by the half-precision mantissa corrector;
the half-precision exponent calculator is configured to acquiring an exponent of the half-precision floating-point format expanded by the half-precision floating-point exponent expander;
the first extended half-precision floating-point multiplier generator is configured to generate a first half-precision floating-point multiplier according to an output result of the half-precision mantissa interpolator and an output result of the half-precision exponent calculator;
the second half-precision floating-point multiplier generator is configured to generate a second half-precision floating-point multiplier according to the half-precision floating-point format expanded by the half-precision floating-point exponent expander;
the half-precision floating-point multiplicator is configured to perform a floating-point multiplication operation on the first half-precision floating-point multiplier and the second half-precision floating-point multiplier; and
the second half-precision floating-point converter is configured to convert a calculation result of the half-precision floating-point multiplicator into a half-precision floating-point format.

5. The transcendental-function calculation circuit system according to claim 4, wherein the half-precision floating-point exponent expander is configured to expand an exponent of the inputted half-precision floating-point format to 6 bits.

6. The transcendental-function calculation circuit system according to claim 4, wherein the half-precision floating-point exponent expander is configured to determine whether an exponent of the inputted half-precision floating-point format is 0 or not; if the exponent is not 0, a new exponent is obtained by adding a preset bias difference to an original exponent to obtain a half-precision floating-point format with an exponent expanded; if the exponent is 0, an operation on leading-zeros is given and a normalization process is performed on the half-precision floating-point format according to a result, so as to obtain a half-precision floating-point format having an exponent expanded with normalization.

7. The transcendental-function calculation circuit system according to claim 6, wherein the normalization process comprises steps of:
assuming a calculation result of the leading-zeros is S;
left-shifting the mantissa of the inputted half-precision floating-point format by S bits, and subtracting the S bits from the original exponent to obtain a new expanded exponent; and
obtaining a converted half-precision floating-point format according to the left-shifted mantissa and the new exponent.

8. The transcendental-function calculation circuit system according to claim 4, wherein the half-precision floating-point multiplicator comprises an input unit, an exponent calculation unit, a mantissa calculation unit, a multiplication matrix unit, a divisible unit and an output unit; wherein
the input unit is configured to input the first half-precision floating-point multiplier and the second half-precision floating-point multiplier;
the exponent calculation unit is configured to calculate an exponent of the first half-precision floating-point multiplier and an exponent of the second half-precision floating-point multiplier;
the mantissa calculation unit is configured to calculate a mantissa of the first half-precision floating-point multiplier and a mantissa of the second half-precision floating-point multiplier;
the multiplication matrix unit is configured to perform a floating-point multiplication operation according to the mantissas calculated by the mantissa calculation unit;
the divisible unit is configured to round up a bit width of the floating-point format according to a divisible flag; and
the output unit is configured to output a final floating-point multiplication operation result according to a rounding result of the divisible unit and an exponent calculated by the exponent calculation unit.

9. The transcendental-function calculation circuit system according to claim 8, wherein the input unit comprises two input nodes, a bit width of one input node includes a first mantissa in a first number of bits and a bit of a hidden 1, and a bit width of another input node includes a second mantissa in a second number of bits and a bit of a hidden 1, both of the input nodes have a same exponent; and a bit width of an output node of the output unit includes a third mantissa in a maximum bit width of 33 bits and a bit of a hidden 1.

10. The transcendental-function calculation circuit system according to claim 8, wherein the transcendental-function calculation circuit system further comprises a half-precision divisible checker, configured to perform a divisible check on the single-precision floating-point multiplicator of the single-precision floating-point format calculation circuit and a divisible check on the half-precision floating-point multiplicator of the half-precision floating-point format calculation circuit according to the floating-point format inputted by the input device, so as to obtain the divisible flag.

11. The transcendental-function calculation circuit system according to anyone of claim 2 to claim 10, wherein the single-precision mantissa corrector or the half-precision mantissa corrector is configured to correct the mantissa by means of:
if the transcendental function is a trigonometric function, reducing a range of a given input and adjusting the mantissa;
if the transcendental function is a logarithmic function, then updating the mantissa where the mantissa of an output result of the logarithmic function is close to 0;
if the transcendental function is an exponential function, then separating an integer part from a decimal part on a true value of the exponential function, and calculating the mantissa according to the decimal part so as to update the mantissa;
if the transcendental function is a square-root or reciprocal-square-root function, then updating the mantissa according to a parity thereof;
if the transcendental function is a reciprocal function, then the mantissa needs no correction; and
if the transcendental function is a division function, then the mantissa needs no correction; or
if a dividend can be expressed as a multiple of an integer multiple of a divisor and a power of 2, then rounding the dividend to a mantissa with a preset number of bits and rounding to a closest half-precision floating-point even number, so as to correct the mantissa.

12. The transcendental-function calculation circuit system according to anyone of claim 2 to claim 10, wherein the mantissa interpolator is configured to perform a quadratic interpolation on a mantissa corrected by the mantissa corrector, wherein a calculation formula for the quadratic interpolation is: $f \left(x\right) = a + bx + cx \overline{x}$ where *a*, *b*, and *c* are 3 interpolation coefficients generated by searching according to high bits of a coefficient corrected mantissa in a lookup table; *x* is lower bits of the corrected mantissa, and *x̅* is a bitwise inversion of *x*.

13. The transcendental-function calculation circuit system according to claim 1, wherein the input device is configured to input a floating-point format of 32 bits; and the output device is configured to output a floating-point format of 32 bits.

14. A transcendental-function calculation method based on interpolation approximation, comprising steps of:
constructing a transcendental-function calculation circuit system;
inputting a floating-point format having a preset number of bits to the transcendental-function calculation circuit system, the floating-point format comprises a single-precision floating-point format and a half-precision floating-point format; and
performing a transcendental function calculation on the inputted floating-point format by the transcendental-function calculation circuit system according to a calculation method of a single-precision floating-point multiplication, and outputting a calculation result in a half-precision floating-point format; performing a transcendental function calculation on the inputted floating-point format by the transcendental-function calculation circuit system according to a calculation method of a half-precision floating-point multiplication, and outputting a calculation result in a half-precision floating-point format.

15. A chip, integrated with the transcendental-function calculation circuit system according to anyone of claim 1 to claim 13.

16. A terminal device, comprising the chip according to claim 15.
